# EUROPEAN PATENT APPLICATION

(11) **EP 2 988 250 A1**
(43) Date of publication of application: **24.02.2016**
(21) Application number: 15180698.1
(22) Date of filing: 02.02.2012
(51) Int. Cl.: G06K 9/00, G06K 9/62

(54) **VISION SYSTEM AND METHOD FOR A MOTOR VEHICLE**

(62) Divisional of application: 12153662.7
(71) Applicant: Autoliv Development AB, 447 83 Vårgårda (SE)
(72) Inventor: Cronvall, Per, 58332 Linköping (SE); Persson, Gustav, 58336 Linköping (SE)
(74) Representative: Müller Verweyen

(57) **Abstract**

A vision system (10) for a motor vehicle, comprising an imaging means (11) with a plurality of imaging devices (12.1, 12.2,..., 12.M) for acquiring images from a surrounding of a motor vehicle, and a processing means (14) adapted to perform image processing on images from said imaging devices (12.1, 12.2,..., 12.M) in order to detect objects in the surrounding of the motor vehicle, wherein said processing means (14) comprises a fusion means (19) for fusing image information from said plurality of imaging devices (12.1, 12.2,..., 12.M), wherein said fusion means (19) comprises an object classifier (23) adapted to verify a class of an object candidate in image data from said imaging devices (12.1, 12.2,..., 12.M), wherein in said fusion means (19), at least one feature descriptor utilizing image information from different imaging devices (12.1, 12.2,..., 12.M) are used and fed to said classifier (23), wherein said classifier (23) is adapted to verify also the proper pairing of an object candidate in the image data of different of said imaging devices (12.1, 12.2,..., 12.M), i.e. that objects detected in images from different imaging devices belong to the same physical object.

## Description

The invention relates to a vision system for a motor vehicle, comprising an imaging means with a plurality of imaging devices for acquiring images from a surrounding of a motor vehicle, and a processing means adapted to perform image processing on images from said imaging devices in order to detect objects in the surrounding of the motor vehicle, wherein said processing means comprises a fusion means for fusing image information from said plurality of imaging means, wherein said fusion means comprises an object classifier adapted to verify a class of an object candidate in image data from said imaging devices.

In vision systems it is often beneficial to use multiple imaging devices, like cameras, in order to obtain more information than would be possible in a single imaging device system. However, in a multiple imaging device system, one problem is that of correspondence. An object detection means based on fusing information from multiple imaging devices requires objects of interest to be localized in at least two of them, and if multiple objects are localized in different imaging devices, these must be correctly paired. This problem is especially pronounced in a system using disparate imaging devices, for example cameras with different sensor types, or very different viewpoints. With such a setup, however, the most gain can be obtained from using multiple imaging devices.

Generally, there is a need for an efficient strategy of how to fuse information from different imaging devices enabling reliable object detection in motor vehicles.

In the prior art, it is known to apply an object classifier separately to the images from each imaging device. In order to make sure that objects detected in images from different imaging devices belong to the same physical object, normalized correlation and similar techniques can be applied. However, this does not work well in the general disparate imaging device and/or multi-view case.

J. Thomanek et al., "Comparing Visual Data Fusion Techniques using FIR and Visible Light Sensors to Improve Pedestrian detection", 2011 International Conference on Digital Image Computing: Techniques and Applications, p. 119-125, discloses a vision system with an FIR camera and a visible light camera and a feature-based fusion scheme for fusing image information from both cameras, comprising a feature vector generating function based on Histogram of Oriented Gradients HOG. After the extraction of the HOG features from both sources, a single feature vector is constructed by concatenating the extracted feature vectors of the individual sensors. Finally, an Adaboost classification is applied.

Y. Yun, "Analysis and Classification of Object Poses: Using Visual / Infrared Images and Feature Fusion", Report No. Ex 040/2011, Chalmers University of Technology, Gothenburg, Sweden 2011, discloses a method of classification of object poses for sets of visual range images on the one hand and thermal infrared images on the other. For the visual range images, Histogram of Oriented Gradients HOG is used as the main feature descriptor. For thermal infrared images, Gabor features are used. The dimensions of the HOG and Gabor feature vectors are reduced by Principal Component Analysis PCA and then fused by Fisher Linear Discriminan to obtain a union feature vector. Finally a multi-class object classifier based on multi-class AdaBoost is applied.

A. Apatean et al., "Obstacle recognition using multiple kernel in visible and infrared images", Intelligent Vehicles Symposium, IEEE 2009, Piscataway, NJ, USA, 3-5 June 2009, p. 370-375, discloses a visible-IR data fusion model calculating visible and IR feature vectors each comprising Haar features, Gabor wavelets, statistic features, discrete cosine transform DCT features, gray level co-occurrence features, run-length encoding RLE features and Laws features. A fused feature vector is computed essentially by concatenating the visible and IR feature vectors. A Feature Selection Subset Evaluation is applied in order to find lower-dimensional subsets of relevant features that are most likely to predict the correct class. Finally, classification based on Support Vector Machines SVM using a linear combination of kernels is applied.

The problem of the invention is to provide a vision system and method providing an efficient strategy for fusing information from different imaging devices enabling reliable object detection, which preferably works well also in the disparate imaging device and/or multi-view case.

The invention solves this problem by the features of the independent claims.

By using at least one feature descriptor utilizing image information from different imaging devices simultaneously, it is possible to verify in a classifier not only the object class but also the proper pairing of objects, i.e. that objects detected in images from different imaging devices belong to the same physical object. This method is practicable with the processing resources available in a motor vehicle and leads to reliable results even in the general disparate imaging device and/or multi-view case.

Expediently, therefore, the classifier is adapted to verify proper pairing of an object candidate in the image data of different of said imaging devices in order to advantageously realize the invention.

Preferably the fusion means comprises an object candidate generator for generating one or more object candidate detections in the images from each of said imaging devices.

Preferably corresponding groups of search windows in images from a plurality of said imaging devices are defined in said fusion means. In this case, the images from a pre-determined one of said imaging devices are scanned periodically in order to define one or more search windows, and for each of said search windows, corresponding search windows are defined in images from another one of said imaging devices. In the preferred case when the imaging means comprises an FIR imaging device, it is preferably the images from this device that are scanned periodically. Preferably the imaging means comprises at least one imaging device operating in a non-FIR wavelength range. In a preferred embodiment this may be an imaging device operating in the visible range. In general, the imaging means can comprises any number of imaging devices, like cameras, operating in one or more wavelength ranges comprising FIR, NIR and/or visible light.

Preferably the fusion means comprises an image patch extractor for extracting image patches from the images of each of the imaging devices in the region of object candidate detections.

Preferably the at least one feature descriptor has the form of a feature vector. In this case, the fusion means preferably comprises a feature vector generator employing a feature vector generating function.

According to the invention the feature vector generating function is based on a weighted sum over pixels in predetermined regions in image patches from each of said imaging devices.

In a preferred embodiment the object classifier may be a boosting based classifier. However, other types of classifiers may be employed, such as SVM, neural network, decision tree, random forest, logistic regression, or bagging based classifiers. In a preferred embodiment, for example, the object classifier uses a weighted sum of decision tree outputs for calculating an object probability estimate.

In the following the invention shall be illustrated on the basis of preferred embodiments with reference to the accompanying drawings, wherein:
- Fig. 1: shows a schematic view of a vision system according to the invention; and
- Fig. 2: shows a schematic flow diagram illustrating the object detection in the processing means of the vision system.

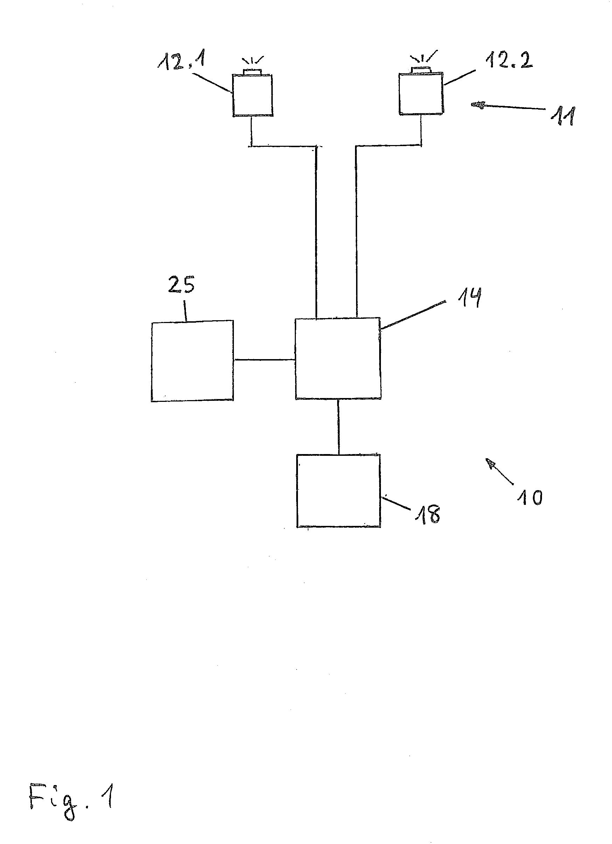

The vision system 10 is mounted in a motor vehicle and comprises an imaging means 11 for acquiring images of a region surrounding the motor vehicle, for example a region in front of the motor vehicle. Preferably the optical imaging means 11 operates mainly in the visible and/or the infrared region, where infrared covers near IR with wavelengths between 0.75 and 5 microns and/or far IR with wavelengths beyond 5 microns. The imaging means 11 comprises a plurality of imaging devices 12.1, 12.2,..., 12.M. In the embodiment of Fig. 1, for example, two imaging devices 12.1, 12.2 are provided. The imaging devices 12.1, 12.2 may in particular be cameras. In a preferred application, the cameras 12.1, 12.2 are operative in different spectral regions. In a preferred embodiment, one of the cameras is an FIR camera 12.1 and the other camera 12.2 operates in the visible region.

The image data taken by the imaging means 11 are provided to an electronic processing means 14 where image and data processing is carried out by corresponding software and/or hardware like for example FPGA and/or ASIC. In particular, the image and data processing in the processing means 14 comprises the following functions: identification and classification of possible objects surrounding the motor vehicle, such as pedestrians, other vehicles, bicyclists or large animals; tracking over time the position of identified object candidates in the recorded images; calculation of a collision probability between the vehicle and a detected object; and/or activation or control of at least one driver assistance and/or safety means 18 depending on the result of the object detection and tracking processing and/or said collision probability calculation. The driver assistance and/or safety means 18 may in particular comprise a display means for displaying information relating to a detected object. However, the invention is not limited to a display means. The driver assistance and/or safety means 18 may in addition or alternatively comprise a warning means adapted to provide a collision warning to the driver by suitable optical, acoustical and/or haptical warning signals; one or more restraint systems such as occupant airbags or safety belt tensioners, pedestrian airbags, hood lifters and the like; and/or dynamic vehicle control systems such as brakes or steering means. The processing means 14 expediently has access to a memory means 25.

The electronic processing means 14 is preferably programmed or programmable and expediently comprises a microprocessor or micro-controller. The electronic processing means 14 can preferably be realized in a digital signal processor (DSP). The electronic processing means 14 and the memory means 25 are preferably realised in at least one on-board electronic control unit (ECU) and may be connected to the imaging means 11 via a separate cable or a vehicle data bus. In another embodiment an ECU and one or more of the imaging devices 12.1, 12.2, ... can be integrated into a single unit, where a one box solution including an ECU and all imaging devices 12.1, 12.2, ... can be preferred. All steps from imaging, image preprocessing, image processing to activation or control of driver assistance and/or safety means 18 are performed automatically and continuously during driving in real time.

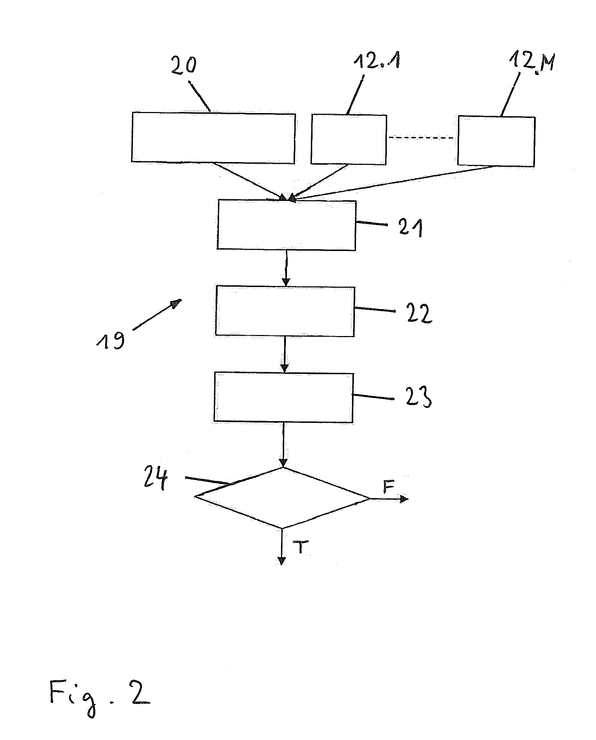

Fig. 2 shows a schematic flow diagram illustrating the object detection in the processing means 14 of the vision system 10. A fusion means 19 for fusing image information from the imaging devices 12.1, ..., 12.M is realized in the processing means 14 by means of software and/or hardware. The fusion means 19 comprises an object candidate generator 20, an image patch extractor 21, a feature vector generator 22 and a classifier 23.

In the object candidate generator 20, for each of a number N of object candidates, like pedestrians, large animals, other vehicles, traffic signs, etc., a detection candidate is generated in each of the number M of camera images from the cameras 12.1 ... 12.M. In the preferred two-camera embodiment of Fig. 1 this may be done by scanning the FIR images from the FIR camera 12.1 continuously, and generating object candidates in the images from the visible light camera 12.2 for a size range corresponding to the possible size range of an object to be detected, like a pedestrian.

The detection candidates are then provided to the image patch extractor 21 together with the camera images from the cameras 12.1 ... 12.M. In the image patch extractor 21, N x M image patches Iᵢⱼ are extracted, where i=1...N and j=1...M. For example in the two-camera embodiment of Fig. 1 image patches are extracted from the FIR camera images and the visible light camera images.

Then, in the feature vector generator 22, for each of the object candidates, i=1...N, a number L of feature vectors xᵢₖ = f(Iᵢ₁,I₂ⱼ,...,I_{iM}, ξₖ) are generated, where k=1...L, f is a feature vector generating function and ξₖ is a vector of parameters. In the preferred two-camera embodiment of Fig. 1, the feature vector generating function f consists of weighted pixel sums over rectangular regions in both image patches, resulting in a number of one-dimensional feature vectors.

Next, in the classifier 23, the object candidates are classified by generating class labels yᵢ = h(xᵢ₁,x_{i2,}...,x_{iL}, γ), where h is a function assigning a class label to each object candidate and γ is a vector of parameters.

Finally, in a decision step 24, object candidates for which the class label yᵢ does not correspond to the object class of interest are rejected (arrow T for TRUE) and object candidates for which the class label yᵢ corresponds to the object class of interest are accepted (arrow F for FALSE). Class labels equal to TRUE, corresponding to object detections, are accepted, while class labels equal to FALSE are rejected.

In a preferred embodiment the classifier 23 is a boosting based classifier. A weighted sum over decision tree outputs, one for each feature vector, results in a pedestrian probability estimate. The object classifier 23 outputs TRUE if the object probability estimate exceeds a predetermined threshold, and FALSE otherwise. Class labels equal to TRUE, corresponding to object detections, are accepted, while class labels equal to FALSE are rejected.

## Claims

1. A vision system (10) for a motor vehicle, comprising an imaging means (11) with a plurality of imaging devices (12.1, 12.2,..., 12.M) for acquiring images from a surrounding of a motor vehicle, and a processing means (14) adapted to perform image processing on images from said imaging devices (12.1, 12.2,..., 12.M) in order to detect objects in the surrounding of the motor vehicle, wherein said processing means (14) comprises a fusion means (19) for fusing image information from said plurality of imaging devices (12.1, 12.2,..., 12.M), wherein said fusion means (19) comprises an object classifier (23) adapted to verify a class of an object candidate in image data from said imaging devices (12.1, 12.2,..., 12.M), wherein in said fusion means (19), at least one feature descriptor utilizing image information from different imaging devices (12.1, 12.2,..., 12.M) are used and fed to said classifier (23), **characterized in that** said classifier (23) is adapted to verify also the proper pairing of an object candidate in the image data of different of said imaging devices (12.1, 12.2,..., 12.M), i.e. that objects detected in images from different imaging devices belong to the same physical object.

2. The vision system as claimed in claim 1, wherein said fusion means (19) comprises an object candidate generator (20) for generating one or more object candidate detections in the images from each of said imaging devices (12.1, 12.2,..., 12.M).

3. The vision system as claimed in any one of the preceding claims, wherein in said fusion means (19) corresponding groups of search windows in images from a plurality of said imaging devices (12.1, 12.2,..., 12.M) are defined.

4. The vision system as claimed in claim 3, wherein the images from a pre-determined one of said imaging devices (12.1, 12.2,..., 12.M) are scanned periodically in order to define one or more search windows, and for each of said search windows, corresponding search windows are defined in images from another one of said imaging devices (12.1, 12.2,..., 12.M).

5. The vision system as claimed in any one of the preceding claims, wherein said fusion means (19) comprises an image patch extractor (21) for extracting image patches from the images of each of said imaging devices (12.1, 12.2, ..., 12.M) in the region of object candidate detections.

6. The vision system as claimed in any one of the preceding claims, wherein said at least one feature descriptor may be expressed as a feature vector.

7. The vision system as claimed in any one of the preceding claims, wherein said fusion means (19) comprises a feature vector generator (22) employing a feature vector generating function.

8. The vision system as claimed in claim 7, wherein said feature vector generating function is based on a weighted sum over pixels in predetermined regions in image patches from each of said imaging devices (12.1, 12.2,..., 12.M).

9. The vision system as claimed in any one of the preceding claims, wherein said object classifier (23) is a boosting based classifier.

10. The vision system as claimed in any one of the preceding claims, wherein said object classifier (23) uses a weighted sum of decision tree outputs for calculating an object probability estimate.

11. The vision system as claimed in any one of the preceding claims, wherein said imaging means (11) comprises at least one FIR imaging device (12.1).

12. The vision system as claimed in claims 4 and 11, wherein said FIR imaging means (12.1) is said pre-determined imaging device the images of which are scanned periodically.

13. The vision system as claimed in any one of the preceding claims, wherein said imaging means (11) comprises at least one imaging device (12.2) operating in the visible range.

14. A vision method for a motor vehicle, comprising acquiring images from a surrounding of a motor vehicle using an imaging means with a plurality of imaging devices, performing image processing on images from said imaging devices in order to detect objects in the surrounding of the motor vehicle, fusing image information from said plurality of imaging means using an object classifier adapted to verify a class of an object candidate in image data from said imaging devices, and using, and feeding to said classifier, at least one feature descriptor utilizing image information from different imaging devices, **characterized by** verifying also the proper pairing of an object candidate in the image data of different of said imaging devices (12.1, 12.2,..., 12.M), i.e. that objects detected in images from different imaging devices belong to the same physical object.
